# EUROPEAN PATENT APPLICATION

(11) **EP 4 840 691 A1**
(43) Date of publication of application: **18.11.2026**
(21) Application number: 24918248.6
(22) Date of filing: 03.12.2024
(51) Int. Cl.: B60N 2/28

(54) **CHILD SAFETY SEAT HAVING POSITION DISPLAYING**

(30) Priority: 15.01.2024 CN 202420096276 U
(71) Applicant: Ningbo Baby First Baby Products Co., Ltd., Ningbo, Zhejiang 315412 (CN)
(72) Inventor: JI, Xuewei, Ningbo, Zhejiang 315412 (CN); LIU, Jianchun, Ningbo, Zhejiang 315412 (CN)
(74) Representative: Lorenz Seidler Gossel Part. mbB
(86) International application number: PCT/CN2024/136551
(87) International publication number: WO 2025/152640

(57) **Abstract**

A child safety seat with position display includes a base (100), a seat body (200), and a position marking assembly (400). A rotary disc (300) is arranged on the base (100). The seat body (200) is arranged on the rotary disc (300). The seat body (200) is slidable relative to the rotary disc (300) by an angle adjustment mechanism to adjust an angle of the seat body (200). The position marking assembly (400) includes a marking portion (410) arranged on the seat body (200) and a position indicator (420) connected to the rotary disc (300). A plurality of position markings (411) are provided at intervals on the marking portion (410). The plurality of position markings (411) are configured such that one of the plurality of position markings (411) is indicated through the position indicator (420). When the seat body (200) is sliding relative to the rotary disc (300) to adjust an angle of a seat back of the seat body (200), the position indicator (420) correspondingly indicates different ones of the plurality of position markings (411). Because the position indicator (420) is arranged on the rotary disc (300), and only relative sliding is allowed between the seat body (200) and the rotary disc (300), a rotational adjustment of the seat body (200) does not affect the cooperation between the position indicator (420) and the marking portion (410). As such, the angular position display is not affected by the rotational adjustment of the seat body (200).

## Description

### TECHNICAL FIELD

The present invention relates to the technical field of child safety seats, and specifically to a child safety seat with position display.

### BACKGROUND

A child safety seat is a seat specifically designed for children, which can restrain a child within the safety seat and effectively improve child riding safety. When a vehicle brakes suddenly or accelerates from a stop, the bottom of the child safety seat can remain fixed, thereby protecting the child from external impact forces in the event of a vehicle collision. A child safety seat generally includes a base and a seat body. The seat body is arranged on the base. The base is connected to a vehicle seat via an interface on the vehicle seat. To ensure the comfort of the child safety seat, an angle adjustment device is provided between the seat body and the base, so as to allow a parent to adjust the seat body to an angular position suitable for the child. The angle adjustment device further includes a position display device for displaying the current angular position of the seat body.

However, in the existing child safety seats, the position display device is typically arranged on the base or on a seat back of the seat body. When the seat body is being rotationally adjusted, the seat body may obstruct the position display device, affecting the display of the angular position. As a result, the user cannot intuitively determine, through the position display device, whether the seat body has been adjusted in place.

### SUMMARY

An objective of the present application is to provide a child safety seat with position display, so that the position display of the position display device is not affected while the seat body is rotationally adjusted.

To achieve the above objective, the following technical solution is adopted in the present invention. A child safety seat with position display is provided, including a base, a seat body, and at least one position marking assembly, where a rotary disc is arranged on the base, the seat body is arranged on the rotary disc, the seat body is slidable relative to the rotary disc by an angle adjustment mechanism to adjust an angle of the seat body, the at least one position marking assembly includes a marking portion arranged on the seat body and a position indicator connected to the rotary disc, a plurality of position markings are provided at intervals on the marking portion, the plurality of the position markings are configured such that one of the plurality of the position markings is indicated through the position indicator, and when the seat body is sliding relative to the rotary disc to adjust an angle of a seat back of the seat body, the position indicator correspondingly indicates different ones of the plurality of the position markings, to indicate an angular position of the seat back of the seat body.

In a preferred embodiment, the child safety seat includes two position marking assemblies, two marking portions of the two position marking assemblies are respectively arranged on two opposing outer side walls of the seat body, and the position indicator is connected to each of positions on the rotary disc corresponding to the two marking portions.

In another preferred embodiment, each of the two marking portions includes a marking body, a transparent cover plate, and a marking panel arranged on the marking body, the transparent cover plate is located above the marking panel and the transparent cover plate is connected to the marking body, the plurality of the position markings are provided at intervals on the transparent cover plate along a sliding direction of the seat body, a plurality of indication windows are provided on the marking panel, a number of the plurality of the indication windows is the same as a number of the plurality of the position markings, positions of the plurality of the indication windows correspond one-to-one to positions of the plurality of the position markings, and the position indicator is configured to be indicated through one of the plurality of the indication windows to indicate different ones of the plurality of the position markings.

In a further preferred embodiment, each of the two marking portions includes a marking body and a marking panel arranged on the marking body, the plurality of the position markings are provided at intervals on the marking panel along a sliding direction of the seat body, a plurality of indication windows are further provided on the marking panel, a number of the plurality of the indication windows is the same as a number of the plurality of the position markings, positions of the plurality of the indication windows correspond one-to-one to positions of the plurality of the position markings, and the position indicator is configured to be indicated through one of the plurality of the indication windows to indicate different ones of the plurality of the position markings.

Further, a transparent cover plate connected to the marking body is arranged above the marking panel, and the transparent cover plate is configured to cover an entirety of the marking panel.

Further, a size of an indication end of the position indicator is larger than a size of each of the plurality of the indication windows.

Further, a color of the position indicator is different from a color of the marking panel.

Further, the marking body is arranged obliquely on an outer side wall of the seat body, and the marking panel is arranged obliquely upward.

Further, the plurality of the indication windows are circular hole structures.

Further, five position markings are provided at intervals on each of the at least one position marking assembly, and the five position markings are Arabic numerals 1, 2, 3, 4, and 5 respectively.

Compared with the prior art, the present invention has the following advantages.
(1) The child safety seat provided by the present application includes a base, a seat body, and a rotary disc. A position indicator is arranged on the rotary disc. Position marking assemblies are respectively arranged on two opposing outer side walls of the seat body. A plurality of position markings are provided at intervals on each of the position marking assemblies. The different position markings are configured such as that one of the position markings is indicated through the position indicator, to display a current angular position of a seat back of the seat body, enabling a parent to quickly and accurately determine, based on the position marking indicated through the position indicator, the current angular position of the seat back of the seat body and whether the angle of the seat back of the seat body has been adjusted in place. This makes it convenient for the parent to quickly adjust the seat body to a required angular position, so as to prevent the seat body from failing to be adjusted in place and thus becoming stuck between two angular positions, which would result in a potential safety hazard during use of the child safety seat.
(2) In the child safety seat provided by the present application, the position indicator is arranged on the rotary disc, the seat body is configured to rotate along with the rotary disc relative to the base, and the seat body is slidable relative to the rotary disc by the angle adjustment mechanism, so that when the seat body is being rotationally or angularly adjusted, the position indicator on the rotary disc can maintain cooperation with the marking portion on the seat body. As such, the angular position display is not affected by the rotational adjustment of the seat body.

### BRIEF DESCRIPTION OF THE DRAWINGS

FIG. 1 is a three-dimensional schematic structural diagram of a child safety seat according to the present invention.
FIG. 2 is a schematic structural diagram of a seat body, a rotary disc, and a base of a child safety seat according to the present invention.
FIG. 3 is an exploded schematic structural view of a child safety seat according to the present application.
FIG. 4 is an exploded schematic structural view of a child safety seat according to another embodiment of the present application.
FIG. 5 is a schematic partially enlarged view of part A in FIG. 4.
FIG. 6 is a three-dimensional schematic structural diagram of a child safety seat when the seat body is at a No. 1 angular position according to the present invention.
FIG. 7 is a schematic partially enlarged view of part B in FIG. 6.
FIG. 8 is a three-dimensional schematic structural diagram of a child safety seat when the seat body is at a No. 5 angular position according to the present invention.
FIG. 9 is a schematic partially enlarged view of part C in FIG. 8.

In the drawings, the reference numerals respectively represent: 100. base; 200. seat body; 300. rotary disc; 400. position marking assembly; 410. marking portion; 411. position marking; 412. marking body; 413. transparent cover plate; 414. marking panel; 415. indication window; 420. position indicator; 421. connecting end; 422. indication end.

### DETAILED DESCRIPTION OF THE EMBODIMENTS

The present invention will be further described below through specific embodiments. It should be noted that the embodiments or technical features described below may be arbitrarily combined to form new embodiments without conflict.

In the description of the present invention, it should be noted that orientation and position relationships indicated by the orientation terms such as "center", "transverse", "longitudinal", "length", "width", "thickness", "on", "below", "front", "rear", "left", "right", "vertical", "horizontal", "top", "bottom", "inner", "outer", "clockwise", and "counterclockwise" are based on the orientation or positional relationships shown in the drawings, and are only for the convenience of describing the present invention and simplifying the description, rather than indicating or implying that the apparatus or element described must have a specific orientation or be constructed and operated in a specific orientation, and therefore are not to be construed as limiting the present invention.

It should be noted that in the specification and claims of the present invention, the terms such as "first" and "second" are intended to distinguish between similar objects but do not indicate a particular order or sequence.

In the specification and claims of the present invention, the terms "include," "comprise," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

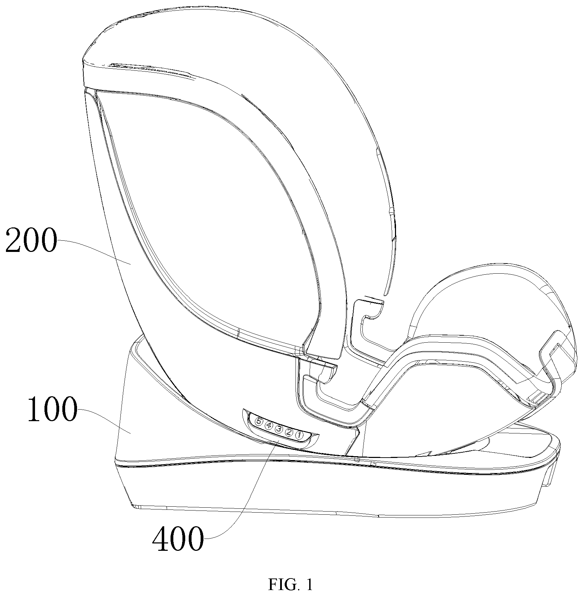

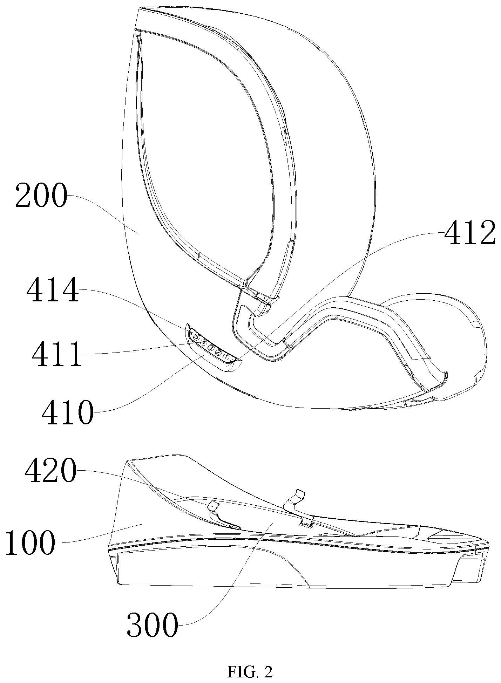

Referring to FIG. 1 to FIG. 2, the present application provides a child safety seat with position display, which includes a base 100 and a seat body 200 arranged on the base 100. A rotary disc 300 is arranged between the base 100 and the seat body 200. The rotary disc 300 is arranged on the base 100. The seat body 200 is connected to the rotary disc 300. The seat body 200 is slidably connected to the rotary disc 300 by an angle adjustment mechanism, allowing the seat body 200 to slide relative to the rotary disc 300 to adjust an angle of a seat back of the seat body 200. The child safety seat further includes two position marking assemblies 400. Each of the position marking assemblies 400 includes a marking portion 410 arranged on the seat body 200 and a position indicator 420 connected to the rotary disc 300. A plurality of position markings 411 are provided at intervals on the marking portion 410. The plurality of position markings 411 are configured such that one of the plurality of position markings 411 is indicated through the position indicator 420. When the seat body 200 is sliding relative to the rotary disc 300 to adjust the angle of the seat back of the seat body 200, the position indicator 420 correspondingly indicates different position markings 411, to indicate an angular position of the seat back of the seat body 200.

Specifically, the two marking portions 410 of the two position marking assemblies 400 are respectively arranged on two opposing outer side walls of the seat body 200, and a position indicator 420 is connected to each of positions on the rotary disc 300 which correspond to the two marking portions 410, so that a parent can observe the angular position of the seat back of the seat body 200 through the position marking assembly 400 whether he or she is on a left or right side of the seat body 200. The position markings 411 are different from each other, i.e., each of the position markings 411 is unique. The alignment of the position indicator 420 with different position markings 411 means that the seat back of the seat body 200 is at different angular positions. The position indicator 420 is indicated through only one position marking 411 at a time.

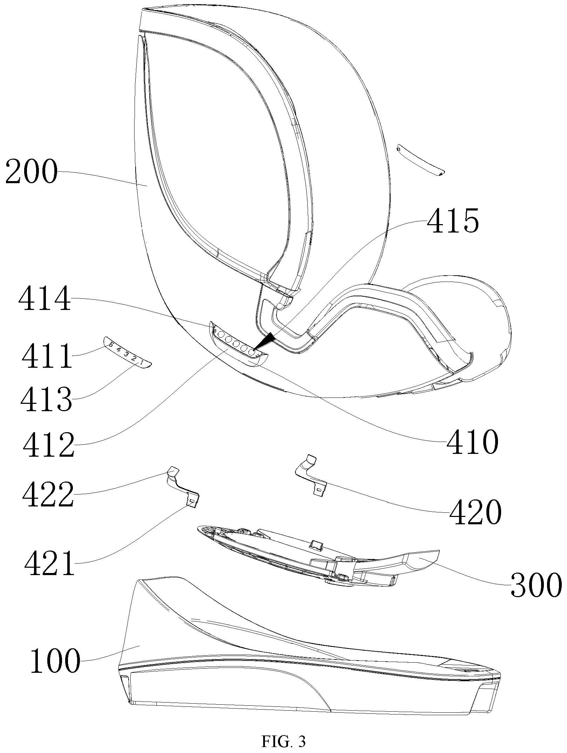

As shown in FIG. 3, in Embodiment 1, the marking portion 410 includes a marking body 412, a transparent cover plate 413, and a marking panel 414 arranged on the marking body 412. The transparent cover plate 413 is located above the marking panel 414 and is connected to the marking body 412. Five position markings 411 are provided on the transparent cover plate 413. The five position markings 411 are arranged at intervals along a sliding direction of the seat body 200 relative to the rotary disc 300. The five position markings 411 are indicated by Arabic numerals 1, 2, 3, 4, and 5 in sequence, referred to as No. 1, No. 2, No. 3. No. 4, and No. 5 position markings below. When the position indicator 420 is indicated through the No. 1 position marking 411, the angle of the seat back of the seat body 200 is the smallest, and the seat back of the seat body 200 is upright. When the position indicator 420 is indicated through the No. 5 position marking 411, the angle of the seat back of the seat body 200 is the largest, and the seat back of the seat body 200 is lying flat. Five indication windows 415 are provided on the marking panel 414. The indication windows 415 are each configured as a circular hole structure. Definitely, the indication windows 415 may also be each configured as a rectangular hole structure. Positions of the indication windows 415 correspond one-to-one to positions of the position markings 411. The position indicator 420 includes a connecting end 421 and an indication end 422. The connecting end 421 of the position indicator 420 is connected to the rotary disc 300. The indication end 422 of the position indicator 420 extends to below the marking panel 414, so that the indication end 422 of the position indicator 420 is indicated through one of the indication windows 415 and points to the corresponding position marking 411.

It should be noted that the five position markings 411 and the five of indication windows 415 are merely an embodiment, and in some other embodiments, the specific number of position markings 411 and the specific number of indication windows 415 may be determined according to the number of angular positions of the child safety seat.

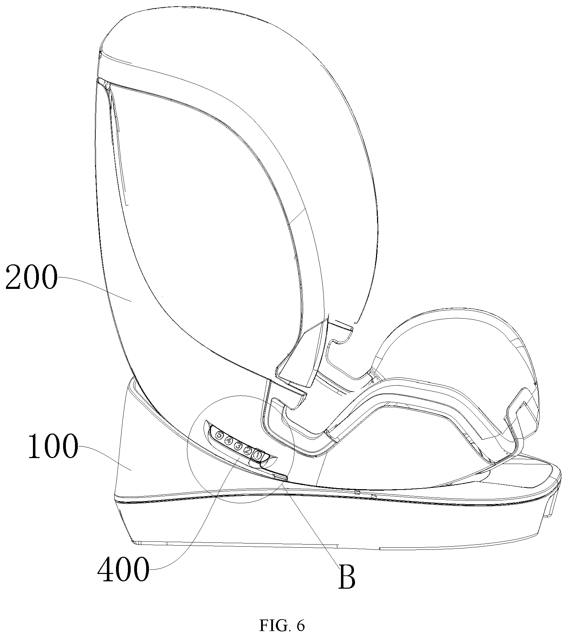

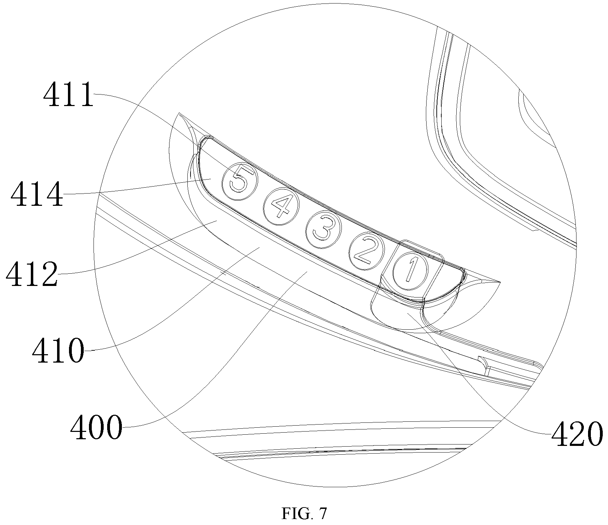

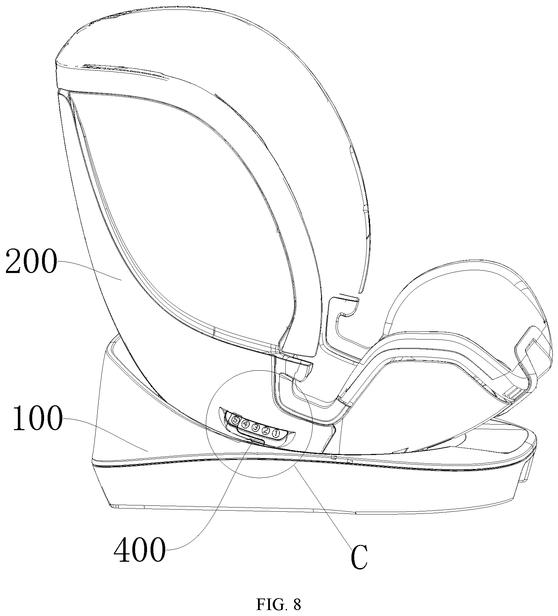

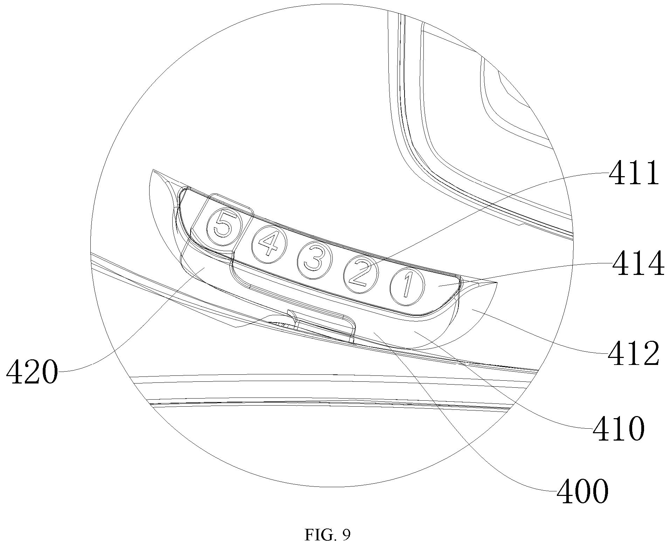

Preferably, a color of the indication end 422 of the position indicator 420 is different from a color of the marking panel 414. For example, the color of the indication end 422 of the position indicator 420 is red, and the color of the marking panel 414 is white. As shown in FIG. 6 to FIG. 7, when the seat body 200 is at a No. 1 angular position, the indication window 415 corresponding to the No. 1 position marking 411 on the marking panel 414 is located above the indication end 422 of the position indicator 420, so that a parent observing the position marking assembly 400 can see the red indication end 422 of the position indicator 420 through the transparent cover plate 413 and the indication window 415 corresponding to the No. 1 position marking 411. In other words, the No. 1 position marking 411 on the transparent cover plate 413 has a red background, enabling the parent to quickly and accurately learn that the seat body 200 is currently at the No. 1 angular position. As shown in FIG. 8 to FIG. 9, to adjust the seat body 200 to a No. 5 angular position, the seat body 200 is sliding relative to the rotary disc 300 and the position indicator 420 arranged on the rotary disc 300, to drive the indication window 415 corresponding to the No. 5 position marking 411 on the marking panel 414 to move to above the indication end 422 of the position indicator 420, so that the red background of the No. 1 position marking 411 disappears and a red background of the No. 5 position marking 411 appears, enabling the parent to learn that the seat body 200 has been adjusted to the No. 5 angular position.

Preferably, a size of the indication end 422 of the position indicator 420 is larger than a size of the indication window 415 on the marking panel 414, i.e., a user can see the "fully red" indication window 415 when viewing from different angles.

Preferably, the marking body 412 is arranged obliquely on an outer side wall of the seat body 200, and the marking panel 414 is arranged obliquely upward, so that a parent can see the indication window 415, the position marking 411, and the position indicator 420 on the marking panel 414 from above the seat body 200. As such, the parent can conveniently observe the angular position during use.

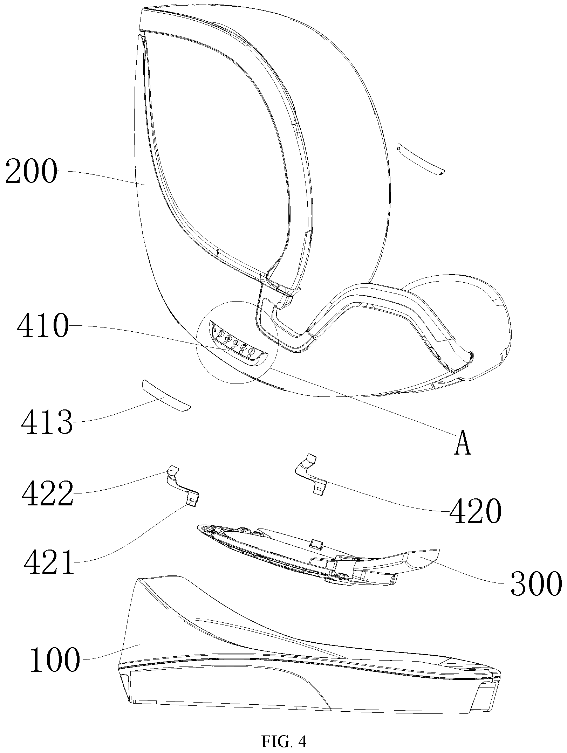

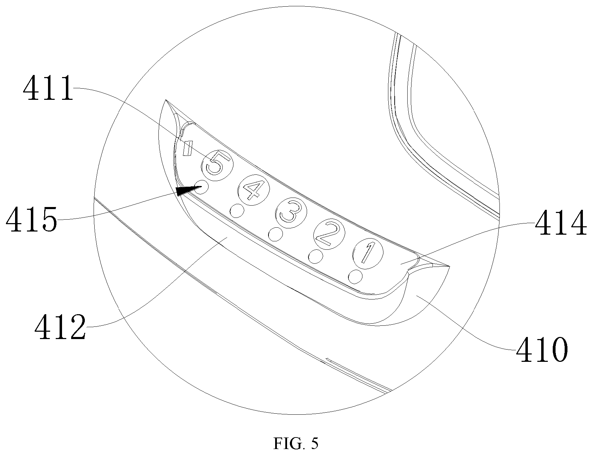

As shown in FIG. 4 to FIG. 5, in Embodiment 2, the marking portion 410 includes a marking body 412 and a marking panel 414 arranged on the marking body 412. Five position markings 411 are provided on the marking panel 414. The five position markings 411 are arranged at intervals along a sliding direction of the seat body 200 relative to the rotary disc 300. The five position markings 411 are Arabic numerals 1, 2, 3, 4, and 5 in sequence, referred to as No. 1, No. 2, No. 3. No. 4, and No. 5 position markings below. When the position indicator 420 is indicated through the No. 1 position marking 411, the angle of the seat back of the seat body 200 is the smallest, and the seat back of the seat body 200 is upright. When the position indicator 420 is indicated through the No. 5 position marking 411, the angle of the seat back of the seat body 200 is the largest, and the seat back of the seat body 200 is lying flat. Five indication windows 415 are further provided on the marking panel 414. The indication windows 415 are each configured as a circular hole structure or a rectangular hole structure. Positions of the indication windows 415 correspond one-to-one to positions of the position markings 411. The indication windows 415 are located above or below the position markings 411. The position indicator 420 includes a connecting end 421 and an indication end 422. The connecting end 421 of the position indicator 420 is connected to the rotary disc 300. The indication end 422 of the position indicator 420 extends to below the marking panel 414, so that the indication end 422 of the position indicator 420 is indicated through one of the indication windows 415 and points to the corresponding position marking 411. The specific shape of the indication window 415 is not limited, and the indication window 415 may also be configured as an annular structure, a triangular structure, etc.

Preferably, a color of the indication end 422 of the position indicator 420 is different from a color of the marking panel 414. For example, the color of the indication end 422 of the position indicator 420 is red, and the color of the marking panel 414 is white. When the seat body 200 is at a No. 1 angular position, the indication window 415 below or above the No. 1 position marking 411 on the marking panel 414 is located above the indication end 422 of the position indicator 420, so that a parent observing the position marking assembly 400 can see the red indication end 422 of the position indicator 420 through the indication window 415 below or above the No. 1 position marking 411. In other words, there is a red mark below or above the No. 1 position marking 411, enabling the parent to quickly and accurately learn that the seat body 200 is currently at the No. 1 angular position. To adjust the seat body 200 to a No. 5 angular position, the seat body 200 is sliding relative to the rotary disc 300 and the position indicator 420 arranged on the rotary disc 300, to drive the indication window 415 below or above the No. 5 position marking 411 on the marking panel 414 to move to above the indication end 422 of the position indicator 420, so that the red mark below or above the No. 1 position marking 411 disappears and a red mark below or above the No. 5 position marking 411 appears, enabling the parent to learn that the seat body 200 has been adjusted to the No. 5 angular position.

Preferably, a transparent cover plate 413 connected to the marking body 412 is further arranged above the marking panel 414, and the transparent cover plate 413 is configured to cover an entirety of the marking panel 414. As such, the transparent cover plate 413 can prevent external dust from entering the rotary disc 300 through the indication windows 415 on the marking panel 414, which would otherwise result in poor sliding between the seat body 200 and the rotary disc 300.

Preferably, the marking body 412 is arranged obliquely on an outer side wall of the seat body 200, and the marking panel 414 arranged obliquely upward, so that a parent can see the indication window 415, the position marking 411, and the position indicator 420 on the marking panel 414 from above the seat body 200. As such, the parent can conveniently observe the angular position during use.

In the above embodiments, because no relative rotation is allowed between the seat body 200 and the rotary disc 300, and only relative sliding is allowed between the seat body 200 and the rotary disc 300, the arrangement of the position indicator 420 on the rotary disc 300 allows for the position indicator 420 to rotate along with the seat body 200 when the seat body 200 is rotationally adjusted, so that the position indicator 420 can maintain cooperation with the marking portion 410 on the seat body 200. As such, the angular position display is not affected by the rotational adjustment of the seat body 200.

The basic principles, main features and advantages of the present invention have been described above. Those skilled in the art should understand that the present invention is not limited to the above embodiments. The descriptions of the embodiments and the specification are only for illustrating the principles of the present invention. Various changes and improvements may be made to the present invention without departing from the spirit and scope of the present invention, and such changes and improvements all fall within the scope of protection claimed by the present invention. The scope of protection claimed by the present invention is defined by the appended claims and their equivalents.

## Claims

1. A child safety seat with position display, **characterized by** comprising a base, a seat body, and at least one position marking assembly, wherein a rotary disc is arranged on the base, the seat body is arranged on the rotary disc, the seat body is slidable relative to the rotary disc by an angle adjustment mechanism to adjust an angle of the seat body, the at least one position marking assembly comprises a marking portion arranged on the seat body and a position indicator connected to the rotary disc, a plurality of position markings are provided at intervals on the marking portion, the plurality of the position markings are configured such that one of the plurality of the position markings is indicated through the position indicator, and when the seat body is sliding relative to the rotary disc to adjust an angle of a seat back of the seat body, the position indicator correspondingly indicates different ones of the plurality of the position markings, to indicate an angular position of the seat back of the seat body.

2. The child safety seat according to claim 1, **characterized in that** the child safety seat comprises two position marking assemblies, two marking portions of the two position marking assemblies are respectively arranged on two opposing outer side walls of the seat body, and the position indicator is connected to each of positions on the rotary disc corresponding to the two marking portions.

3. The child safety seat according to claim 2, **characterized in that** each of the two marking portions comprises a marking body, a transparent cover plate, and a marking panel arranged on the marking body, the transparent cover plate is located above the marking panel and the transparent cover plate is connected to the marking body, the plurality of the position markings are provided at intervals on the transparent cover plate along a sliding direction of the seat body, a plurality of indication windows are provided on the marking panel, a number of the plurality of the indication windows is the same as a number of the plurality of the position markings, positions of the plurality of the indication windows correspond one-to-one to positions of the plurality of the position markings, and the position indicator is configured to be indicated through one of the plurality of the indication windows to indicate different ones of the plurality of the position markings.

4. The child safety seat according to claim 2, **characterized in that** each of the two marking portions comprises a marking body and a marking panel arranged on the marking body, the plurality of the position markings are provided at intervals on the marking panel along a sliding direction of the seat body, a plurality of indication windows are further provided on the marking panel, a number of the plurality of the indication windows is the same as a number of the plurality of the position markings, positions of the plurality of the indication windows correspond one-to-one to positions of the plurality of the position markings, and the position indicator is configured to be indicated through one of the plurality of the indication windows to indicate different ones of the plurality of the position markings.

5. The child safety seat according to claim 4, **characterized in that** a transparent cover plate connected to the marking body is arranged above the marking panel, and the transparent cover plate is configured to cover an entirety of the marking panel.

6. The child safety seat according to any one of claims 3 to 5, **characterized in that** a size of an indication end of the position indicator is larger than a size of each of the plurality of the indication windows.

7. The child safety seat according to claim 6, **characterized in that** a color of the position indicator is different from a color of the marking panel.

8. The child safety seat according to claim 6, **characterized in that** the marking body is arranged obliquely on an outer side wall of the seat body, and the marking panel is arranged obliquely upward.

9. The child safety seat according to claim 6, **characterized in that** the plurality of the indication windows are circular hole structures.

10. The child safety seat according to claim 1, **characterized in that** five position markings are provided at intervals on each of the at least one position marking assembly, and the five position markings are Arabic numerals 1, 2, 3, 4, and 5 respectively.
